# EUROPEAN PATENT APPLICATION

(11) **EP 2 249 095 A1**
(43) Date of publication of application: **10.11.2010**
(21) Application number: 09702222.2
(22) Date of filing: 15.01.2009
(51) Int. Cl.: F24F 13/28

(54) **INDOOR UNIT FOR AIR CONDITIONER**

(30) Priority: 16.01.2008 JP 2008007342
(71) Applicant: Daikin Industries, Ltd., Osaka 530-8323 (JP)
(72) Inventor: MICHITSUJI, Yoshiharu, Sakai-shi Osaka 591-8511 (JP); SAKASHITA, Akihiko, Sakai-shi Osaka 591-8511 (JP); YOKOMIZO, Tsuyoshi, Sakai-shi Osaka 591-8511 (JP)
(74) Representative: HOFFMANN EITLE
(86) International application number: PCT/JP2009/000125
(87) International publication number: WO 2009/090874

(57) **Abstract**

An air filter (30) rotates inltermittently over a predetermined angle at a time while being in contact with a rotating brush (51). Each time the air filter (30) stops, the rotating brush (51) is rotated to successively change an area of the brush (51b) to be in contact with the air filter (30).

## Description

### TECHNICAL FIELD

The present invention relates to an indoor unit of an air conditioner including a brush member in contact with an air filter for removing dust.

### BACKGROUND ART

Among indoor units of air conditioners having an air filter at an air inlet, those provided with dust removing means for removing dust trapped on the air filter have been known.

For example, an air conditioner disclosed in Patent Document 1 includes an air filter (pre-filter) formed in a disc shape. A rotating brush as the dust removing means is provided along the radial direction of the air filter so as to be in contact with the air filter. In this air conditioner, as the air filter rotates, the rotating brush rotates in synchronism with the air filter at a lower speed than the rotational speed of the air filter. Thus, the dust on the air filter is scraped off (removed) by the rotating brush.
PATENT DOCUMENT 1: Japanese Published Patent Application No. 2007-38215

### SUMMARY OF THE INVENTION

### TECHNICAL PROBLEM

Now, in the indoor unit of Patent Document 1 described above, since the rotating brush also rotates in synchronism with the air filter, the scraping capability of the rotating brush is weak, thus lowering the dust removing efficiency.

In view of this, one may think of preventing the rotating brush from rotating when the air filter rotates, thus increasing the scraping capability of the rotating brush. In such a case, however, since the area of contact between the rotating brush and the air filter is constant, the amount of dust captured quickly reaches its limit, thus significantly lowering the removing capacity.

The present invention has been made in view of the above, and has an object to provide an indoor unit of an air conditioner having a function of scraping off dust on an air filter by means of a rotating brush by moving the air filter and the rotating brush relative to each other, wherein a high dust removing capacity is maintained for a long time without lowering the scraping capability of the rotating brush.

### SOLUTION TO THE PROBLEM

A first aspect is directed to an indoor unit of an air conditioner including an indoor heat exchanger (22), an indoor fan (21), and an air filter (30) provided on an inlet side of the indoor fan (21), provided in a casing (10). The indoor unit of the this aspect includes: a rotating brush (51) including a brush (51b) on an outer circumferential surface thereof for scraping dust off of the air filter (30) by moving the brush (51b) relative to the air filter (30) while the brush (51b) is in contact with the air filter (30); and brush drive means (53) for rotating the rotating brush (51) over a predetermined angle each time the air filter (30) relatively moves over a certain distance or a certain amount of time to thereby successively change a contact area between the brush (51b) and the air filter (30).

According to this aspect, as the air which has been sucked into the casing (10) by the indoor fan (21) passes through the air filter (30), dust contained in the air is trapped on the air filter (30). During the operation of removing dust from the air filter (30), the air filter (30) and the rotating brush (51) move relative to each other while the brush (51b) of the rotating brush (51) is in contact with the air filter (30). That is, the air filter (30) moves relative to the rotating brush (51), or the rotating brush (51) moves relative to the air filter (30). Thus, dust on the air filter (30) is scraped off (removed) by the brush (51b) of the rotating brush (51). In this operation, the rotating brush (51) does not rotate, and therefore the dust scraping capability of the rotating brush (51) is high.

Here, for example, when the air filter (30) moves over a certain distance or when the amount of time the air filter (30) has moved reaches a certain amount of time, the rotating brush (51) rotates over a predetermined angle. This changes the area of the brush (51b) of the rotating brush (51) to be in contact with the air filter (30). That is, an area of the brush (51b) of the rotating brush (51) having no dust thereon newly comes into contact with the air filter (30). This prevents the dust removing capacity from lowering due to an increase in the amount of dust captured on the rotating brush (51). Therefore, the dust removing capacity of the rotating brush (51) is maintained over a long time.

A second aspect is according to the first aspect, wherein the air filter (30) is configured to perform an intermittent operation in which the air filter (30) stops each time the air filter (30) relatively moves over a certain distance or a certain amount of time. The brush drive means (53) is configured to rotate the rotating brush (51) over a predetermined angle for each of the intermittent stops of the air filter (30).

According to this aspect, the air filter (30) alternately moves and stops moving while it is kept in contact with the brush (51b) of the brush member (51). When the air filter (30) moves, dust on the air filter (30) is removed by the rotating brush (51). When the air filter (30) stops, the rotating brush (51) rotates over a predetermined angle so as to change the area of the brush (51b) to be in contact with the air filter (30). Therefore, since the air filter (30) does not pass the brush (51b) of the rotating brush (51) while the rotating brush (51) is rotating, the dust removing capacity is reliably maintained across the entire air filter (30).

A third aspect is according to the first or second aspect, wherein a cleaning brush (52) is provided for a cleaning brush (52) to be in contact with the brush (51b) of the rotating brush (51) for removing dust from the brush (51b).

According to this aspect, dust which has been trapped on the rotating brush (51) is removed as the brush (51b) of the rotating brush (51) comes into contact with the cleaning brush (52).

A fourth aspect is according to the third aspect, wherein the cleaning brush (52) is configured so that dust is removed from the brush (51b) of the rotating brush (51) when the brush (51b) comes into contact with the cleaning brush (52) as the rotating brush (51) rotates over a predetermined angle at a time.

According to this aspect, as the rotating brush (51) rotates, the brush (51b) of the rotating brush (51) comes into contact with the cleaning brush (52). Thus, dust which has been trapped on the rotating brush (51) is removed by the cleaning brush (52).

A fifth aspect is according to one of the first to fourth aspects, wherein the brush (51b) of the rotating brush (51) is made of pile fabric.

According to this aspect, since the brush (51b) of the rotating brush (51) is made of pile fabric, the length of the bristles thereof is relatively short. Thus, the distance between the air filter (30) and the rotating brush (51) is short.

A sixth aspect is according to the fifth aspect, wherein the air filter (30) is formed in a disc shape and is configured to rotate and thereby move relative to the rotating brush (51). On the other hand, the rotating brush (51) is arranged upstream of the air filter (30) and so as to extend in a radial direction of the air filter (30).

According to this aspect, dust on the air filter (30) is removed by the brush (51b) as the air filter (30) rotates while it is in contact with the brush (51b) of the rotating brush (51).

A seventh aspect is according to the third or fourth aspect, wherein there is provided a dust storing container (60) arranged upstream of the air filter (30) and provided with the rotating brush (51) and the cleaning brush (52) for storing dust removed by the cleaning brush (52). The indoor unit of the this aspect further includes dust transfer means (80) for introducing air blowing from the indoor fan (21) into the dust storing container (60) and transferring dust in the dust storing container (60) to a predetermined location along with the blowing air.

According to this aspect, dust on the air filter (30) is removed by the rotating brush (51), and the dust which has been trapped on the rotating brush (51) is removed by the cleaning brush (52). The removed dust is stored in the dust storing container (60). According to this aspect, the air blowing from the indoor fan (21) is introduced into the dust storing container (60), and the dust is transferred to a predetermined location (e.g., to the outside of the casing (10)) along with the air. That is, dust which has been removed from the air filter (30) is transferred to another location by using the air blowing from the indoor fan (21).

### ADVANTAGES OF THE INVENTION

As described above, according to an aspect of the present invention, each time the air filter (30) moves relative to the rotating brush (51) over a certain distance or a certain amount of time while it is in contact with the rotating brush (51), the rotating brush (51) is rotated so as to successively change the area to be in contact with the air filter (30). This prevents the dust removing capacity from lowering due to an increase in the amount of dust captured on the rotating brush (51). Therefore, the dust removing capacity of the rotating brush (51) is maintained over a long time, and it is possible to reliably and easily remove dust from the entire air filter (30). As a result, it is possible to improve the reliability of the cleaning function of the air filter (30).

According to the second aspect, the air filter (30) is intermittently moved relative to the rotating brush (51), and the rotating brush (51) is rotated each time the air filter (30) stops so as to successively change the area to be in contact with the air filter (30). Therefore, since the air filter (30) does not pass the brush (51b) of the rotating brush (51) while the rotating brush (51) is rotating, the dust removing capacity is reliably maintained across the entire air filter (30). Therefore, it is possible to further improve the reliability of the cleaning function of the air filter (30).

According to the third aspect, the cleaning brush (52) is provided for removing the dust which has been trapped on the rotating brush (51). Thus, it is possible to reliably maintain the dust removing function of the rotating brush (51).

Moreover, according to the fourth aspect, the brush (51b) of the rotating brush (51) is kept in contact with the cleaning brush (52) while the rotating brush (51) is rotated over a predetermined angle at a time to thereby remove dust from the rotating brush (51). Therefore, it is possible to shorten the amount of time required for removing the dust which has been trapped on the rotating brush (51). Thus, it is possible to improve the efficiency of the cleaning function of the air filter (30).

According to the fifth aspect, the brush (51b) of the rotating brush (51) is made of pile fabric. Therefore, the bristles of the brush (51b) are short, and it is possible to reduce the space for installing the rotating brush (51). As a result, it is possible to reduce the size of the indoor unit (1) while maintaining the dust removing function.

According to the sixth aspect, the air filter (30) formed in a disc shape is rotated relative to the rotating brush (51) so as to remove dust. Therefore, as compared with a case where the air filter (30) is formed in a rectangular shape and is moved in sliding motion, for example, it is possible to eliminate the space required for the movement of the air filter (30).

Thus, it is possible to further reduce the size of the indoor unit.

According to the seventh aspect, there are provided the dust storing container (60) for storing dust removed from the air filter (30), and the dust transfer means (80) for transferring the dust in the dust storing container (60) to a predetermined location by means of the air blowing from the indoor fan (21). Therefore, the removed dust can be easily moved to a predetermined location for an easier disposition without providing a separate transfer means such as a suction fan. Therefore, it is possible to facilitate the disposition of the dust removed from the air filter (30) without increasing the size or the cost of the indoor unit (1).

### BRIEF DESCRIPTION OF THE DRAWINGS

[FIG. 1] FIG. 1 is a vertical cross-sectional view showing a configuration of an indoor unit according to an embodiment.
[FIG. 2] FIG. 2 is a lateral cross-sectional view showing a configuration of an indoor unit according to the embodiment, as viewed from above.
[FIG. 3] FIG. 3 is a perspective view showing a configuration of a partition plate, an air filter and a dust storing container according to the embodiment.
[FIG. 4] FIG. 4 is a cross-sectional view showing the attachment of the air filter according to the embodiment.
[FIG. 5] FIG. 5 is a perspective view showing a configuration of filter drive means according to the embodiment.
[FIG. 6] FIG. 6 is a perspective view showing a configuration of dust removing means and the dust storing container according to the embodiment, as viewed from above.
[FIG. 7] FIG. 7 is a perspective view showing a configuration of the dust removing means and the dust storing container according to the embodiment, as viewed from below.
[FIG. 8] FIG. 8 is a lateral cross-sectional view showing a configuration of the dust storing container according to the embodiment.
[FIG. 9] FIG. 9 is a lateral cross-sectional view showing a configuration of storage amount detection means according to the embodiment, relative to the dust storing container.
[FIG. 10] FIG. 10 is a cross-sectional view showing a configuration of a major part of dust transfer means according to the embodiment.
[FIG. 11] FIG. 11 is a cross-sectional view showing a configuration of a major part of the dust transfer means according to the embodiment.
[FIG. 12] FIG. 12 is a lateral cross-sectional view showing an operation of the dust removing means during a dust removing operation according to the embodiment.
[FIG. 13] FIG. 13 is a lateral cross-sectional view showing an operation of the dust removing means during a brush cleaning operation according to the embodiment.

### DESCRIPTION OF REFERENCE CHARACTERS

- 1: Indoor unit
- 10: Casing
- 2l: Indoor fan
- 22: Indoor heat exchanger
- 30: Air filter
- 51: Rotating brush
- 51b: Brush
- 52: Cleaning brush
- 53: Brush drive means
- 60: Dust storing container
- 80: Dust transfer means

### DESCRIPTION OF EMBODIMENTS

An embodiment of the present invention will now be described in detail with reference to the drawings.

An indoor unit (1) of the present embodiment forms a part of an air conditioner, and is installed on a ceiling in a room. The air conditioner includes a refrigerant circuit, in which a compressor, an outdoor heat exchanger and an expansion valve provided in an outdoor unit are connected to an indoor heat exchanger (22) provided in the indoor unit (1). The refrigerant circuit perform a vapor compression refrigeration cycle, with refrigerant circulating in a reversible manner. The air conditioner performs a cooling operation in which the indoor heat exchanger (22) functions as an evaporator in the refrigerant circuit, and a heating operation in which the indoor heat exchanger (22) functions as a condenser in the refrigerant circuit.

### <Configuration of Indoor Unit>

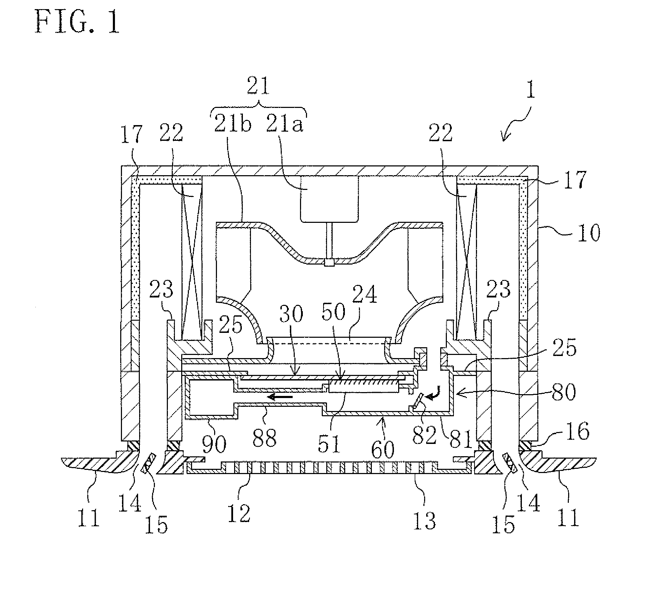

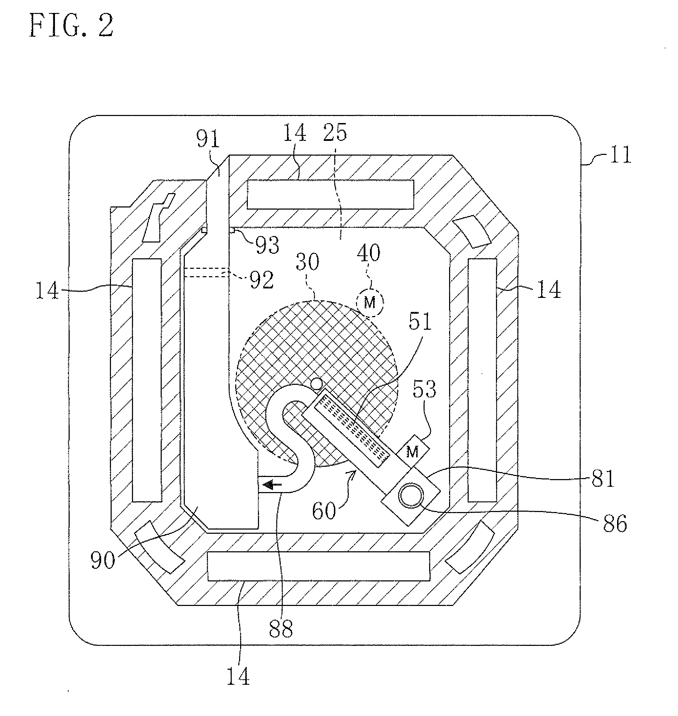

As shown in FIGS. 1 and 2, the indoor unit (1) includes a casing (10) and a decorative panel (11). The indoor heat exchanger (22), a drain pan (23), an indoor fan (21), an air filter (30), filter drive means (40), dust removing means (50), a dust storing container (60), dust transfer means (80), and a dust collection box (90) are provided in the casing (10).

The casing (10) is formed in the shape of a substantially rectangular parallelepiped box whose lower side is open. A heat insulator (17) is laminated on an inner surface of the casing (10). The casing (10) is arranged with its lower portion inserted in an opening in a ceiling board.

The decorative panel (11) is formed in the shape of a rectangular plate. The decorative panel (11) when viewed in plan is slightly larger than the casing (10) when viewed in plan. The decorative panel (11) is attached to the casing (10) so as to cover the lower side of the casing (10) with a sealant member (16) sandwiched therebetween. With the decorative panel (11) attached to the casing (10), the decorative panel (11) is exposed in the room.

The decorative panel (11) includes one inlet (13) and four outlets (14). The inlet (13) is formed in a rectangular shape, and is formed in a center portion of the decorative panel (11). A suction grille (12) formed with slits is fitted in the inlet (13). Each outlet (14) is formed in the shape of an elongated rectangle. The outlets (14) are formed along the sides of the decorative panel (11), respectively. An air flow direction adjuster plate (15) is provided at each outlet (14). The air flow direction adjuster plate (15) pivots to adjust the air flow direction (blowing direction).

The indoor fan (21) is a so-called turbo fan. The indoor fan (21) is arranged near the center of the casing (10), and is located over the inlet (13). The indoor fan (21) includes a fan motor (21a) and an impeller (21b). The fan motor (21a) is fixed to a top plate of the casing (10). The impeller (21b) is connected to a rotation axis of the fan motor (21a). A bell mouth (24) communicating with the inlet (13) is provided under the indoor fan (21). The bell mouth (24) divides the space in the casing (10) upstream of the indoor heat exchanger (22) into a portion near the indoor fan (21) and a portion near the suction grille (12). The indoor fan (21) is configured to blow air sucked from below through the bell mouth (24) in a radial direction.

The indoor heat exchanger (22) is configured as a cross-fin type fin-and-tube heat exchanger. The indoor heat exchanger (22) is formed in the shape of a rectangular frame when viewed in plan, and is arranged to surround the indoor fan (21). In the indoor heat exchanger (22), heat is exchanged between the refrigerant and the indoor air sent by the indoor fan (21) (blowing air).

The drain pan (23) is provided under the indoor heat exchanger (22). The drain pan (23) receives drainage generated as a result of condensation of moisture in the air in the indoor heat exchanger (22). The drain pan (23) is provided with a drain pump (not shown) for discharging the drainage. The drain pan (23) is inclined so that the drainage is collected to the location at which the drain pump is provided.

A partition plate (25) is provided under the bell mouth (24). The partition plate (25) divides the space between the bell mouth (24) and the suction grille (12) into an upper portion and a lower portion. That is, the partition plate (25) divides the space upstream of the indoor heat exchanger (22) into a portion near the indoor heat exchanger (22) including the bell mouth (24) and a portion near the suction grille (12).

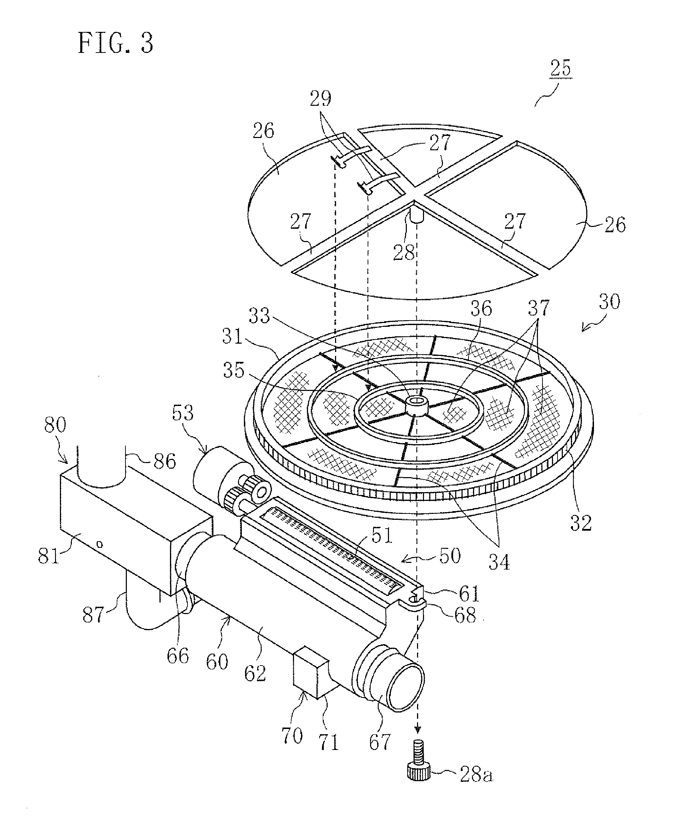

A vent (26) through which the air sucked through the inlet (13) flows into the bell mouth (24) is formed in the center of the partition plate (25). As shown in FIG. 3, the vent (26) is formed as a circular hole divided into fan-shaped portions by four radial members (27) extending in the radial direction of the circular hole. The radial members (27) are connected to one another at the center of the circle, at which a cylindrical filter rotation shaft (28) protrudes downwardly. The filter rotation shaft (28) is a rotation shaft about which the air filter (30) rotates. Two filter holders (29) are provided on one of the radial members (27).

As shown in FIG. 3, the air filter (30) is arranged under the partition plate (25), and is formed in a disc shape large enough to cover the inlet of the bell mouth (24). Specifically, the air filter (30) includes an annular filter body (31) and a mesh member (37). A gear portion (32) is provided on an outer circumferential surface of the filter body (31). A cylindrical shaft receiving portion (33) supported by six radial ribs (34) is provided in the annular central portion of the filter body (31). That is, the radial ribs (34) extend radially from the shaft receiving portion (33). An inner circumferential rib (35) and an outer circumferential rib (36), each formed in an annular shape concentric with the filter body (31), are provided in the inner circle area of the filter body (31). The outer circumferential rib (36) is formed with a larger diameter than the inner circumferential rib (35). The mesh member (37) is provided to extend across the entire inner circle area of the filter body (31). The air sucked through the inlet (13) passes through the mesh member (37) of the air filter (30), and flows into the bell mouth (24). At this point, the dust in the air is trapped on the mesh member (37).

The air filter (30) is biased downwardly by the above-described filter holders (29) abutting the circumferential ribs (35,36). Therefore, the air filter (30) is pressed onto a rotating brush (51) of the dust removing means (50) to be described later. This improves the removing efficiency of the dust removing means (50).

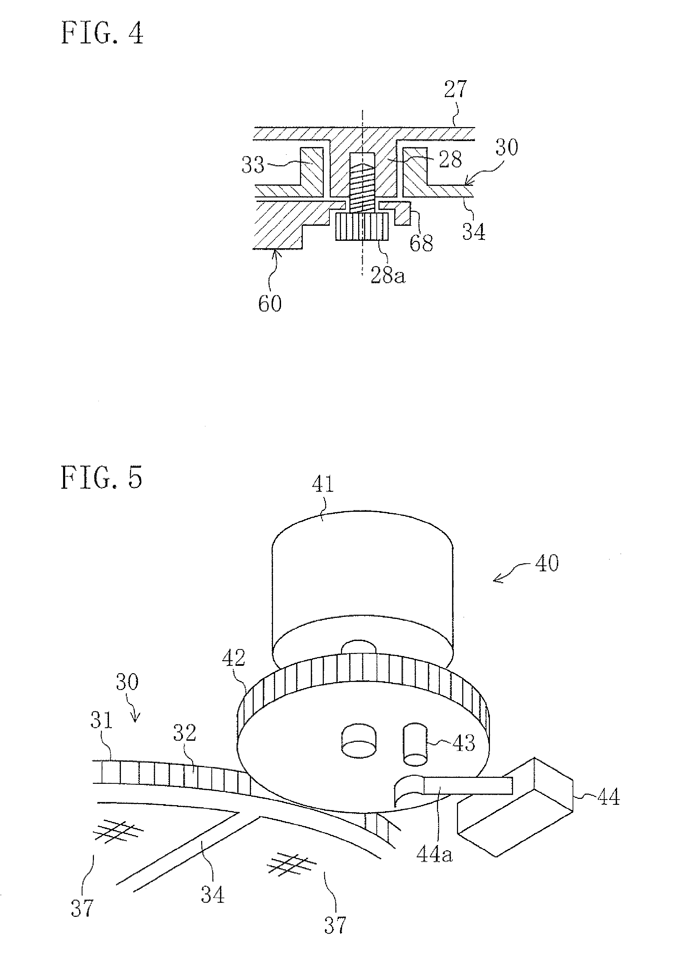

As shown also in FIG. 4, the air filter (30) is attached as the shaft receiving portion (33) is fitted around the filter rotation shaft (28) of the partition plate (25). The air filter (30) is rotatable about the filter rotation shaft (28). The dust storing container (60) is arranged under the air filter (30). With the air filter (30) fitted around the shaft receiving portion (33), a filter attachment (68) of the dust storing container (60) is fixed to the shaft receiving portion (33) of the partition plate (25) by the fixing screw (28a). Thus, the air filter (30) is held between the partition plate (25) and the dust storing container (60).

The filter drive means (40) for rotating the air filter (30) is provided near the air filter (30) (see FIG. 2). In the present embodiment, the filter drive means (40) is configured to intermittently rotate the air filter (30) by a predetermined angle at a time. Thus, the dust on the air filter (30) is scraped off (removed) by the rotating brush (51).

That is, in the present embodiment, the filter drive means (40) forms the moving means for moving the air filter (30) and the rotating brush (51) relative to each other. The filter drive means (40) is configured to stop the air filter (30) each time it has rotated (moved) the air filter (30) over a certain distance or a certain amount of time.

As shown in FIG. 5, the filter drive means (40) includes a filter drive motor (41) and a limit switch (44). A drive gear (42) is provided on the drive shaft of the filter drive motor (41), and the drive gear (42) meshes with the gear portion (32) of the filter body (31). A switch actuator portion (43), which is a protrusion, is provided on one end surface of the drive gear (42). The switch actuator portion (43) actuates the lever (44a) of the limit switch (44) as the drive gear (42) rotates. When the switch actuator portion (43) actuates the lever (44a), it is detected by the limit switch (44). That is, the switch actuator portion (43) and the limit switch (44) are for detecting the rotational position of the drive gear (42), hence the rotational position of the air filter (30).

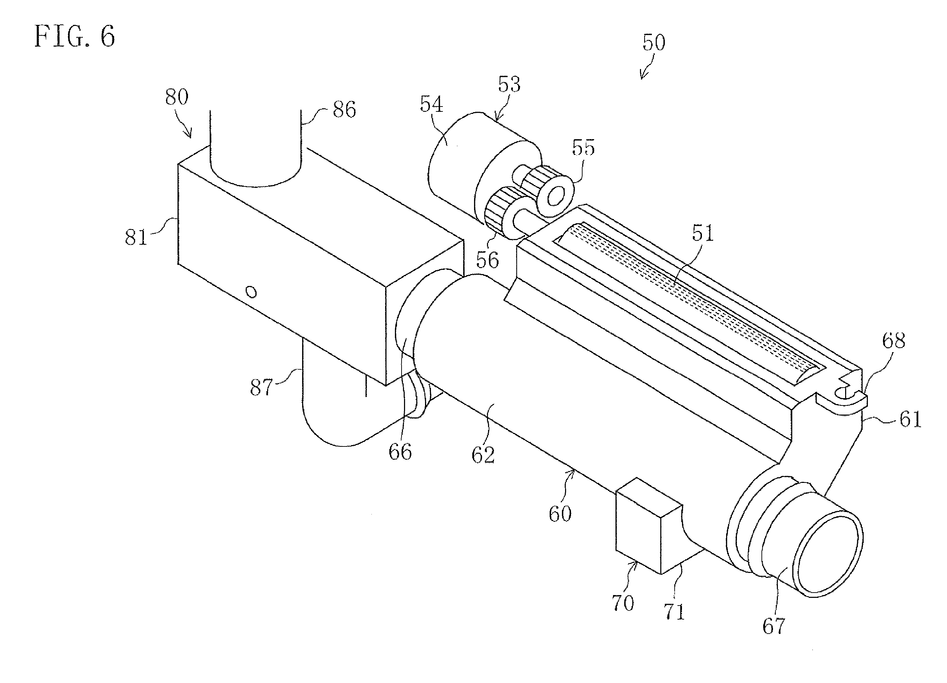

Next, the dust removing means (50), the dust storing container (60) and the dust transfer means (80) will be described with reference to FIGS. 6-11. The dust removing means (50), etc., are arranged below the partition plate (25) or the air filter (30) (see FIG. 1 or 2).

The dust removing means (50) is for removing the dust trapped on the air filter (30). The dust removing means (50) includes the rotating brush (51), a cleaning brush (52), and brush drive means (53).

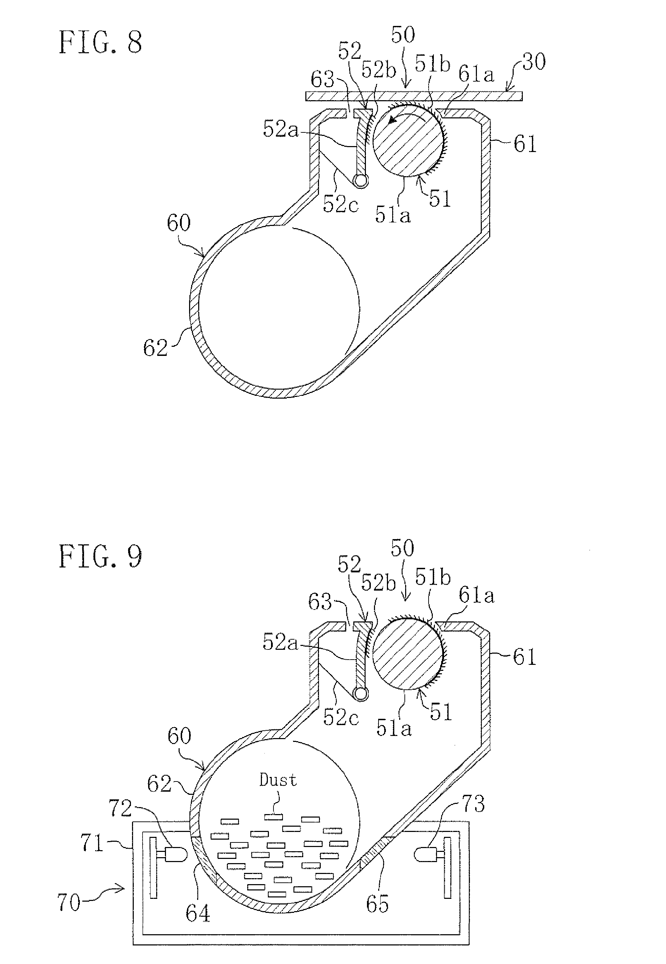

As shown in FIG. 8, the rotating brush (51) and the cleaning brush (52) are provided in a brush opening (63) of the dust storing container (60) to be described later.

The rotating brush (51) includes an elongated cylindrical shaft (51a), and a brush (51b) provided on the outer circumferential surface of the shaft (51a). The brush (51b) is formed of a plurality of bristles. The brush (51b) is provided so as to extend over a portion (generally, half a round, in the present embodiment) of the shaft (51a) in the circumferential direction thereof, and to extend in the longitudinal direction of the shaft (51a).

The cleaning brush (52) is arranged rearward of the rotating brush (51). The cleaning brush (52) includes a body portion (52a), a brush (52b), and a spring portion (52c). The body portion (52a) is a plate-like member, and has the same length as the shaft (51a) of the rotating brush (51). The body portion (52a) is provided with a plate surface thereof facing the outer circumferential surface of the rotating brush (51). An upper portion of the body portion (52a) forms an arc portion corresponding to the outer circumferential surface of the shaft (51a) of the rotating brush (51). The brush (52b) is provided on the arc portion of the body portion (52a) extending in the longitudinal direction of the body portion (52a). The spring portion (52c) is provided at a lower end of the body portion (52a), and is attached to an inner wall of the dust storing container (60). That is, the body portion (52a) is supported by the spring portion (52c).

The rotating brush (51) and the cleaning brush (52) are each formed to a length greater than or equal to the radius of the air filter (30). The rotating brush (51) and the cleaning brush (52) are arranged to extend radially outwardly from the circular center of the air filter (30). The rotating brush (51) is configured in such a manner that the dust is removed from the mesh member (37) as the brush (51b) comes into contact with the mesh member (37) of the rotating air filter (30).

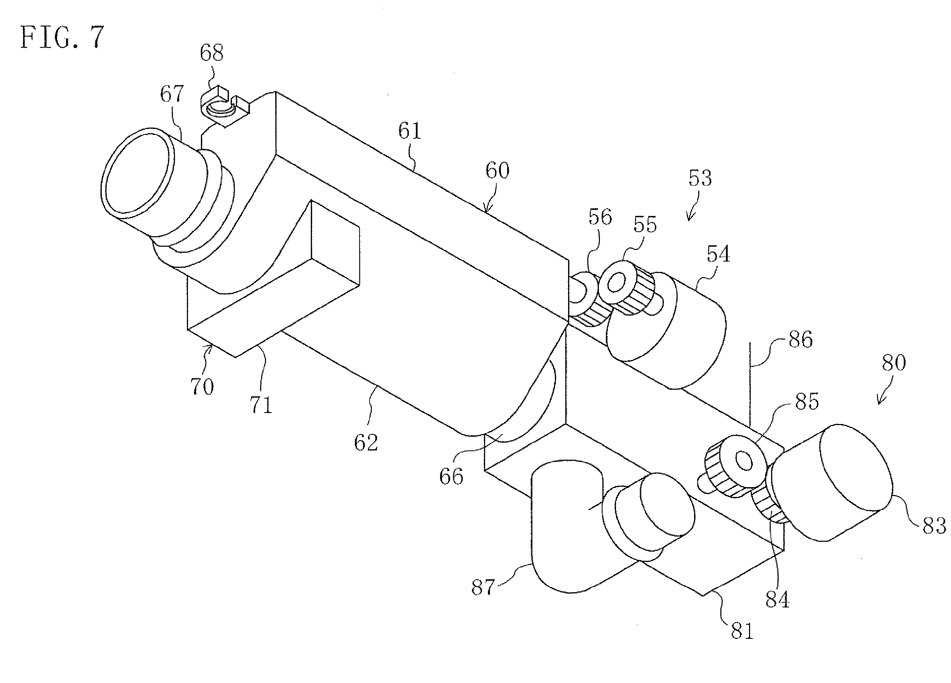

The brush drive means (53) rotates the rotating brush (51) in a reversible manner. As shown in FIGS. 6 and 7, the brush drive means (53) includes a brush drive motor (54), and a drive gear (55) and a driven gear (56) meshing with each other. The drive gear (55) is provided on the drive shaft of the brush drive motor (54), and the driven gear (56) is provided at an end portion of the shaft (51a) of the rotating brush (51). With such a configuration, the rotating brush (51) is rotated.

As a feature of the present invention, the brush drive means (53) is configured to rotate the rotating brush (51) in a certain direction over a predetermined angle each time the air filter (30) has stopped after rotating over a predetermined angle as described above. That is, in the present embodiment, each time the air filter (30) has rotated (moved) over a certain distance or a certain amount of time, the area of the brush (51b) of the rotating brush (51) to be in contact with the air filter (30) is changed successively by the brush drive means (53). The details of this operation will be described later.

The brush (52b) of the cleaning brush (52) is configured to come into contact with the brush (51b) of the rotating brush (51) as the rotating brush (51) is rotated by the brush drive means (53) over a predetermined angle at a time. By this contact, dust is removed from the brush (51b) of the rotating brush (51). That is, the cleaning brush (52) is for cleaning the rotating brush (51) by removing dust from the rotating brush (51). The details of the dust removing function of the rotating brush (51) and the cleaning brush (52) will be described later.

The brushes (51b,52b) of the rotating brush (51) and the cleaning brush (52) are made of so-called pile fabric. The pile fabric is hairy fabric obtained by weaving a fiber (pile yarn) into base fabric, and has relatively short bristles. The pile fabric is inclined pile in which the bristles are inclined in a certain direction.

Specifically, the bristles of the brush (51b) of the rotating brush (51) are inclined leftward from the shaft (51a) in FIG. 8. That is, the bristles of the brush (51b) are inclined so as to oppose against the rotation direction (moving direction) of the air filter (30). If the air filter (30) rotates so as to oppose against the bristles of the brush (51b) as described above, dust on the mesh member (37) is scraped off efficiently. On the other hand, if the air filter (30) rotates on the bristles of the brush (51b) in the inclined direction thereof, dust on the mesh member (37) is not scraped off, but rather dust trapped on the brush (51b) is removed.

The bristles of the brush (52b) of the cleaning brush (52) are inclined downward from the body portion (52a) in FIG. 8. That is, the bristles of the brush (52b) are inclined so as to oppose against the rotation direction when the rotating brush (51) rotates clockwise in FIG. 8.

The dust storing container (60) is for containing dust removed from the rotating brush (51) by the cleaning brush (52). The dust storing container (60) is a columnar container bent slightly in the shape of ">" when viewed from the side (when viewed from the right in FIG. 6). An upper portion of the dust storing container (60) is a removal portion (61) for removing the dust on the air filter (30), and a lower portion is a storing portion (62) for storing the dust removed from the air filter (30).

The brush opening (63) is formed in the top plate of the removal portion (61), extending in the longitudinal direction, and the rotating brush (51) and the cleaning brush (52) are provided in the brush opening (63) as described above. Note that the above-described filter attachment (68) is provided at one side surface of the removal portion (61). The lower end side (bottom portion side) of the storing portion (62) is bulging in an arc shape. Dust removed from the rotating brush (51) by the cleaning brush (52) falls into, and is stored in, the arc portion of the storing portion (62). Opposite end portions (66,67) of the storing portion (62) in the longitudinal direction are opened. A damper box (81) of the dust transfer means (80) to be described later is connected to the first end portion (66) of the storing portion (62). A transfer duct (88) of the dust transfer means (80) to be described later is connected to the second end portion (67) of the storing portion (62).

As shown in FIG. 9, the dust storing container (60) is provided with storage amount detection means (70) for detecting the amount of dust in the storing portion (62). The storage amount detection means (70) includes a sensor box (71). The sensor box (71) is provided close to the second end portion (67) of the storing portion (62) of the dust storing container (60) (see FIG. 6 or 7). The sensor box (71) extends in the transverse direction across the storing portion (62) so as to cover the bottom portion thereof. A light emitting LED (72) and a photo transistor (73) are accommodated in the sensor box (71). The light emitting LED (72) and the photo transistor (73) are arranged so as to face each other in the transverse direction across the storing portion (62) with the storing portion (62) interposed therebetween. On the other hand, a first transparent window (64) and a second transparent window (65) are provided on the wall surface of the storing portion (62) in areas corresponding to the light emitting LED (72) and the photo transistor (73).

In the storage amount detection means (70), the light intensity of light from the light emitting LED (72) which has successively passed through the first transparent window (64) and the second transparent window (65) is detected by the photo transistor (73). The amount of dust stored in (i.e., the degree of fullness of) the storing portion (62) is detected based on the detected light intensity. That is, when the amount of dust stored is small, the transmittance of light from the first transparent window (64) to the second transparent window (65) in the storing portion (62) is high, detecting a high light intensity. In contrast, if the amount of dust stored is large, the transmittance of light from the first transparent window (64) to the second transparent window (65) in the storing portion (62) is low, detecting a low light intensity. Thus, for example, when the light intensity is less than or equal to a predetermined value, the storage amount detection means (70) can determine that the storage amount of the storing portion (62) has become full.

As shown in FIGS. 2, 6 and 7, the dust transfer means (80) includes the damper box (81) and the transfer duct (88) described above, an introduction duct (86), and a suction duct (87).

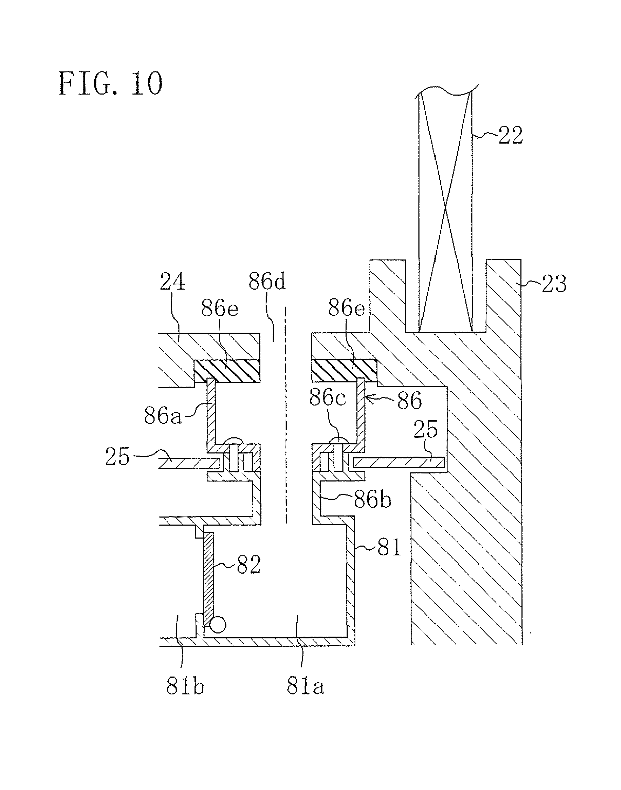

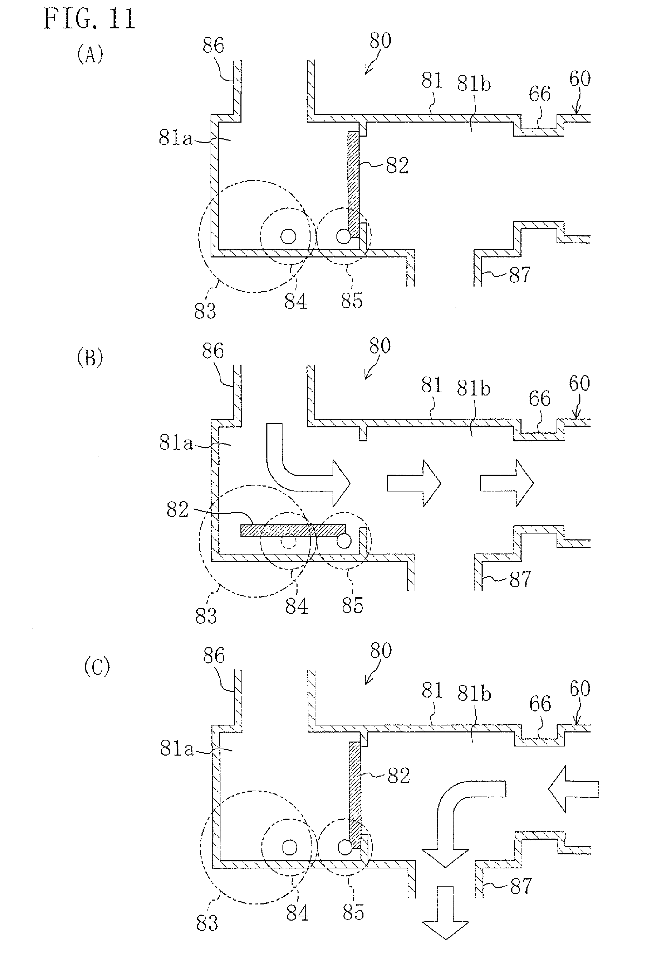

The damper box (81) is formed in a rectangular parallelepiped shape extending in the longitudinal direction of the storing portion (62) of the dust storing container (60). The first end portion (66) of the storing portion (62) is connected to one end of the damper box (81) in the longitudinal direction. As shown in FIGS. 10 and 11, one damper (82), which is an open/close member, is provided in the damper box (81). When the damper (82) is closed, the internal space of the damper box (81) is divided in the longitudinal direction. That is, the internal space of the damper box (81) is divided into a first room (81a) and a second room (81b). The first end portion (66) of the storing portion (62) is connected to the second room (81b) as described above.

As shown in FIG. 7 or 11, the dust transfer means (80) includes a damper drive motor (83) for opening/closing the damper (82), a drive gear (84), and a driven gear (85). The drive gear (84) is provided on the drive shaft of the damper drive motor (83), and the driven gear (85) is provided on the pivot shaft of the damper (82). The drive gear (84) and the driven gear (85) mesh with each other. With this configuration, the rotation of the damper drive motor (83) is transmitted to the rotation shaft of the damper (82) through the gears (84,85). Thus, the damper (82) pivots about the pivot shaft to perform the open/close operation.

The introduction duct (86) is connected to the upper surface of the damper box (81) and communicates with the first room (81a). As shown in FIG. 10, the introduction duct (86) extends vertical upward from the damper box (81), and passes through the partition plate (25). The introduction duct (86) includes an upstream-side duct (86a) and a downstream-side duct (86b) whose lateral cross sections are circular, and the two members are connected to each other with the fixing screw (28a) in the vertical direction. The lateral cross-sectional area (flow path area) of the upstream-side duct (86a) is larger than the lateral cross-sectional area (flow path area) of the downstream-side duct (86b). The lower end (the lower side in FIG. 10) of the downstream-side duct (86b) is connected to the damper box (81). The upper end (the upper side in FIG. 10) of the upstream-side duct (86a) is in contact with a horizontally-extending member of the bell mouth (24) with a sealant member (86e) interposed therebetween. An inlet (86d) which is a through hole is formed in the horizontal member of the bell mouth (24). The upstream-side duct (86a) communicates with the space near the indoor fan (21) through the inlet (86d). That is, the introduction duct (86) is for introducing the air blowing from the indoor fan (21) into the damper box (81).

The junction between the upstream-side duct (86a) and the downstream-side duct (86b) of the introduction duct (86) is located in a through hole portion of the partition plate (25). Specifically, the ducts (86a,86b) are connected to each other so that the edge of the through hole of the partition plate (25) is sandwiched between the bottom plate of the upstream-side duct (86a) and the upper end flange of the downstream-side duct (86b). This section including the junction and the sealant member (86e) is configured so that the introduction duct (86), the damper box (81) and the dust storing container (60) pivot together about the axial center of the introduction duct (86).

One end of the suction duct (87) on the inlet side is connected to the lower surface of the damper box (81) and communicates with the second room (81b). The other end of the suction duct (87) on the outlet side is connected to a cleaner insertion hole (not shown) formed in the decorative panel (11). The cleaner insertion hole is an opening for receiving a hose of a cleaner, etc., inserted therein for suction. Note that the suction duct (87) is formed by a flexible tube.

As shown in FIG. 1 or 2, one end of the transfer duct (88) is connected to the second end portion (67) of the storing portion (62) of the dust storing container (60), and the other end thereof is connected to the dust collection box (90) to be described later. The transfer duct (88) is formed by a flexible tube.

In the dust transfer means (80), the damper (82) of the damper box (81) is closed (see FIG. 11(A)) in a normal operation of performing cooling/heating. Therefore, the air blowing from the indoor fan (21) is not introduced into the damper box (81). In the dust transfer means (80), the damper (82) of the damper box (81) is opened (see FIG. 11(B)) when transferring the dust in the dust storing container (60) to the dust collection box (90). Therefore, the air blowing from the indoor fan (21) is introduced into the dust storing container (60) through the introduction duct (86) and the damper box (81). As a result, the dust in the dust storing container (60) is transferred to the dust collection box (90) through the transfer duct (88) along with the air. That is, the dust in the dust storing container (60) is discharged. Moreover, in the dust transfer means (80), the damper (82) of the damper box (81) is closed (see FIG. 11(C)) also when the dust in the dust collection box (90) is discharged out of the casing (10). In this case, by sucking from the cleaner suction hole by a cleaner, the dust in the dust collection box (90) is sucked into the cleaner through the transfer duct (88), the damper box (81) and the suction duct (87). That is, the dust transfer means (80) is configured to transfer the dust in the dust storing container (60) to a predetermined position by using the air blowing from the indoor fan (21).

As shown in FIGS. 1 and 2, the dust collection box (90) stores the dust transferred from the dust storing container (60) as described above. The dust collection box (90) is formed in a somewhat elongated, substantially rectangular parallelepiped shape, and is arranged under the partition plate (25) as is the dust storing container (60). The dust collection box (90) is arranged along one edge of the partition plate (25) so as not to overlap with the air filter (30) when viewed in plan. Thus, one end portion, opposite to the side where the transfer duct (88) is connected, of the dust collection box (90) for the air sucked in through the suction grille (12) serves as an exhaust port (91). The portion of the exhaust port (91) passes through the casing (10) and communicates with the inside of the room. Note that a sealant member (93) is provided in the portion where the exhaust port (91) passes through.

The portion of the exhaust port (91) of the dust collection box (90) is smaller in area than the other portion when viewed in plan. A side plate of the dust collection box (90) close to the air filter (30) is formed in an arch shape corresponding to the outer circumference of the air filter (30). Moreover, a filter (92) is provided in the dust collection box (90) close to the exhaust port (91). When transferring the dust from the dust storing container (60) to the dust collection box (90), the air inside the dust collection box (90) is discharged from the exhaust port (91). Then, the transferred dust does not flow out of the exhaust port (91) because of the provision of the filter (92). When the dust is discharged from the dust collection box (90) by suction of a cleaner, the indoor air flows into the dust collection box (90) through the exhaust port (91). Then, dust in the air flowing in is trapped on the filter (92). Thus, the air supply/exhaust through the exhaust port (91) keeps an appropriate pressure balance in the dust collection box (90), thereby allowing for appropriate transfer and discharge of dust to and from the dust collection box (90).

### -Operation-

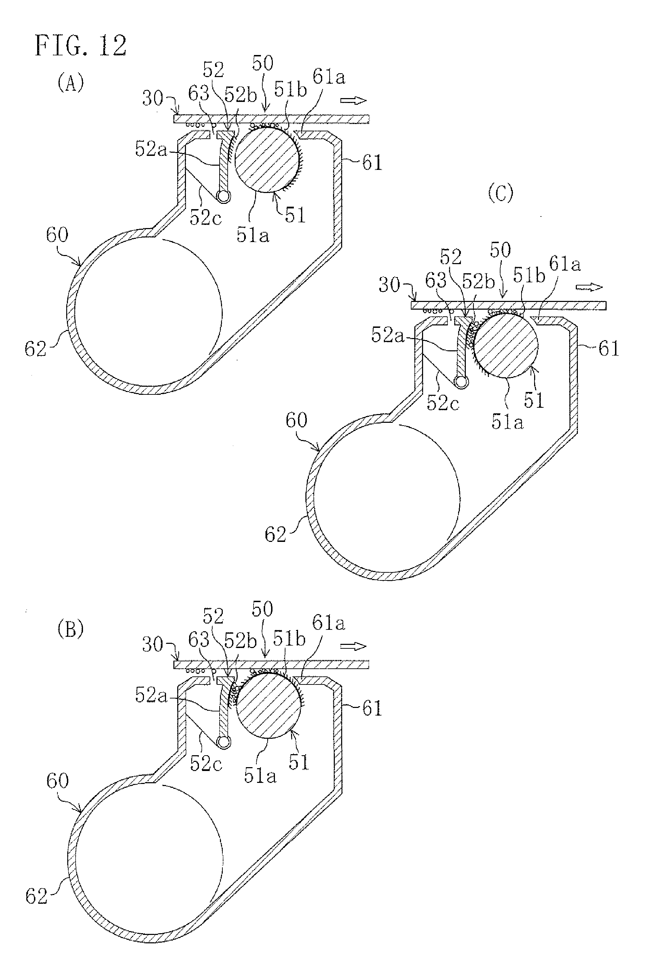

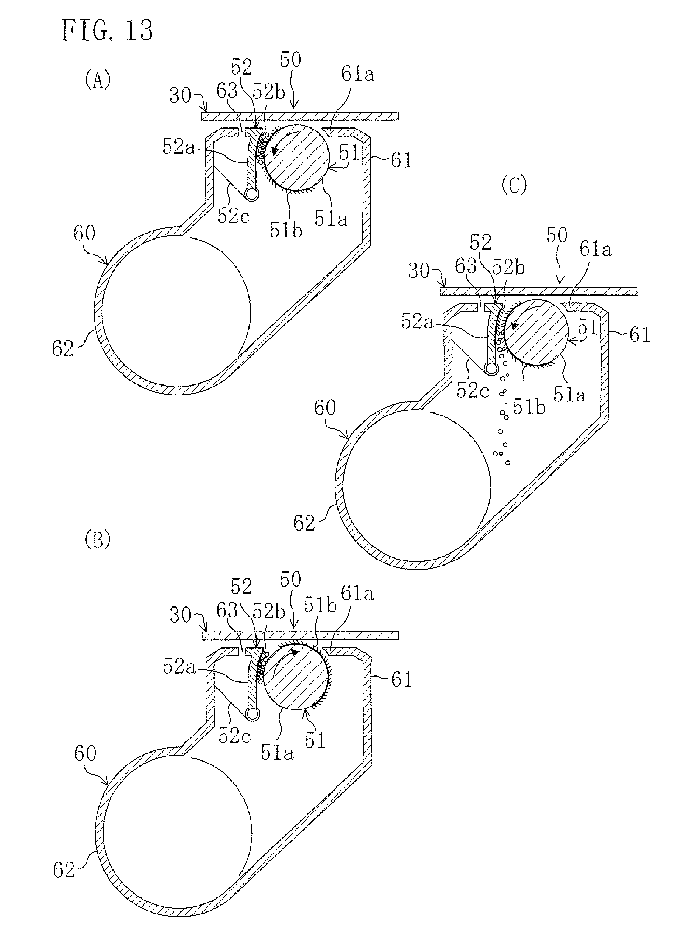

Next, an operation of the indoor unit (1) will be described with reference to FIGS. 12 and 13. The indoor unit (1) is capable of selectively performing a normal operation of performing cooling/heating and a filter cleaning operation of cleaning the air filter (30).

### <Normal Operation>

In the normal operation, the air filter (30) and the rotating brush (51) are kept still, and the damper (82) of the damper box (81) is closed.

In this state, the indoor fan (21) is driven. Then, indoor air sucked into the indoor unit (1) through the inlet (13) passes through the air filter (30) and flows into the bell mouth (24). When the air passes through the air filter (30), dust in the air is trapped on the mesh member (37) of the air filter (30). The air which has flown into the bell mouth (24) blows out from the indoor fan (21). The blowing air exchanges heat with the refrigerant of the indoor heat exchanger (22) to be cooled or heated, after which it is supplied into the room through the outlets (14). Thus, the room is cooled or heated. In this operation, since the damper (82) of the damper box (81) is closed, the air blowing from the indoor fan (21) is not introduced into the dust storing container (60) through the damper box (81).

### <Filter Cleaning Operation>

In the filter cleaning operation, the compressor is stopped in the refrigerant circuit, and the refrigerant does not circulate therethrough. In the filter cleaning operation, a "dust removing operation," a "brush cleaning operation," a "dust transfer operation," and a "dust discharge operation" can be performed selectively.

The "dust removing operation" is an operation of removing the dust trapped on the air filter (30). The "brush cleaning operation" is an operation of removing the dust attached to the rotating brush (51). The "dust transfer operation" is an operation of transferring the dust from the dust storing container (60) to the dust collection box (90). The "dust discharge operation" is an operation of discharging the dust from the dust collection box (90) to the outside of the casing (10).

In the present embodiment, the "brush cleaning operation" is performed after the "dust removing operation" is performed. In the "dust removing operation," the indoor fan (21) is kept still, and the air filter (30) rotates intermittently.

Specifically, as shown in FIG. 12(A), the rotating brush (51) is first rotated so that a left-hand portion of the brush (51b) of the rotating brush (51) comes into contact with the air filter (30). In this state, the air filter (30) is rotated in the direction indicated by an arrow in FIG. 12(A). That is, the air filter (30) moves so as to oppose against the bristles of the brush (51b) of the rotating brush (11). Note that at this point the rotating brush (51) is kept still.

Then, the dust on the air filter (30) is trapped on the brush (51b) of the rotating brush (51). Then, when the lever (44a) of the limit switch (44) of the filter drive means (40) is actuated, the filter drive motor (41) is stopped, and the air filter (30) stops. That is, the air filter (30) stops after rotating over a predetermined angle (about 120° in the present embodiment). Therefore, dust has been removed off an area of about 120° of the air filter (30). Here, since the bristles of the brush (51b) are inclined so as to oppose against the rotation direction (moving direction) of the air filter (30), the dust on the air filter (30) is easily scraped off by the brush (51b). Therefore, the dust removing efficiency of the rotating brush (51) is improved.

When the air filter (30) is stopped, the rotating brush (51) is rotated counterclockwise over a predetermined angle so that the central portion of the brush (51b) of the rotating brush (51) comes into contact with the air filter (30) as shown in FIG. 12(B). This changes the contact area between the brush (51b) and the air filter (30) so that an area of the brush (51b) where no dust is attached comes into contact with the air filter (30). Therefore, the dust removing capacity of the rotating brush (51) is maintained. Note that along with the rotation of the rotating brush (51), the left-hand portion of the brush (51b), which has been in contact with the air filter (30), comes into contact with the brush (52b) of the cleaning brush (52) with dust remaining trapped thereon.

When the rotating brush (51) stops after rotating over a predetermined angle as described above, the air filter (30) is again rotated in the direction indicated by an arrow in FIG. 12(B). Then, dust on the air filter (30) is trapped on the brush (51b) of the rotating brush (51) as described above. Here, dust on the air filter (30) can be scraped off reliably and easily because the area of the brush (51b) in contact with the air filter (30) is changed to maintain the removing capacity of the rotating brush (51). Then, when the lever (44a) of the limit switch (44) of the filter drive means (40) is actuated again, the filter drive motor (41) is stopped, and the air filter (30) stops. That is, the air filter (30) stops after rotating over about 120° again. As a result of these operations, the rotating brush (51) has scraped dust off an area of about 240° of the air filter (30).

When the air filter (30) stops, the rotating brush (51) is rotated again counterclockwise over a predetermined angle so that a right-hand portion of the brush (51b) of the rotating brush (51) comes into contact with the air filter (30) as shown in FIG. 12(C). This changes the contact area between the brush (51b) and the air filter (30) so that an area of the brush (51b) where no dust is attached comes into contact with the air filter (30). As a result, the dust removing capacity of the rotating brush (51) is maintained. Note that along with the rotation of the rotating brush (51), the central portion of the brush (51b), which has been in contact with the air filter (30), comes into contact with the brush (52b) of the cleaning brush (52) with dust remaining trapped thereon.

When the rotating brush (51) stops after rotating over a predetermined angle, the air filter (30) is again rotated in the direction indicated by an arrow in FIG. 12(C). Then, dust on the air filter (30) is trapped on the brush (51b) of the rotating brush (51) as described above. Here, dust on the air filter (30) is scraped off reliably because the dust removing capacity of the rotating brush (51) is maintained. Then, when the lever (44a) of the limit switch (44) is actuated again, the filter drive motor (41) is stopped and the air filter (30) stops. Thus, the air filter (30) has made one revolution. Therefore, dust has been scraped off by the rotating brush (51) of the entire air filter (30). As described above, the "dust removing operation" is completed, and the "brush cleaning operation" is started.

In the "brush cleaning operation," the rotating brush (51) first rotates counterclockwise as shown in FIG. 13(A), where the indoor fan (21) continues to remain still. Then, the right-hand portion (i.e., a portion which has been in contact with the air filter (30)) of the brush (51b) of the rotating brush (51) comes into contact with the brush (52b) of the cleaning brush (52) with dust remaining trapped thereon. Then, the rotating brush (51) stops after rotating over a predetermined angle.

Then, the rotating brush (51) rotates in a direction opposite to the above (i.e., clockwise) as shown in FIG. 13(B). Then, dust which has been trapped on the brush (51b) of the rotating brush (51) is reliably trapped on the brush (52b) of the cleaning brush (52). Since the bristles of the brush (52b) of the cleaning brush (52) are inclined downward (i.e., in a direction that opposes against the rotation direction of the rotating brush (51)), dust is reliably scraped off of the brush (51b) of the rotating brush (51).

As the brushes (51b,52b) come into contact with each other, the body portion (52a) of the cleaning brush. (52) is pushed backward, but the body portion (52a) is biased by the spring portion (52c) toward the rotating brush (51). Thus, the brushes (51b,52b) are not separated from each other, but the cleaning brush (52) is appropriately pressed against the rotating brush (51). Therefore, dust is more reliably removed from the brush (51b) of the rotating brush (51). By the operation above, dust is removed from the rotating brush (51). Note that the rotating brush (51) stops after rotating to the original state (the state shown in FIG. 12(A)).

Then, the rotating brush (51) again rotates counterclockwise over a predetermined angle as shown in FIG. 13(C). Then, dust which has been trapped on the brush (52b) of the cleaning brush (52) is scraped off by the brush (51b) of the rotating brush (51), and falls into the storing portion (62) of the dust storing container (60). Since the bristles of the brush (51b) of the rotating brush (51) are inclined in the rotation direction, dust is reliably scraped off of the brush (52b) of the cleaning brush (52). Also in this operation, the cleaning brush (52) is appropriately pressed against the rotating brush (51) by the spring portion (52c) as described above, and dust is more reliably removed from the cleaning brush (52). As described above, dust removed from the air filter (30) is stored in the storing portion (62) of the dust storing container (60). Then, the rotating brush (51) again rotates clockwise and returns back to the original state (the state shown in FIG. 12(A)), ending the "brush cleaning operation."

Now, in the "brush cleaning operation" described above, the amount of dust stored in the dust storing container (60) is detected by the storage amount detection means (70). That is, the light intensity of light from the light emitting LED (72) is detected by the photo transistor (73). Then, when the light intensity detected by the photo transistor (73) is less than or equal to a predetermined value (the lower limit value), the operation is switched to the "dust transfer operation" assuming that the amount of dust in the dust storing container (60) has reached a predetermined amount.

In the "dust transfer operation," the rotating brush (51) is stopped in the state shown in FIG. 13(B), and the air filter (30) is also stopped. The damper (82) of the damper box (81) is in the open state (the state shown in FIG. 11(B)). In this state, the indoor fan (21) is driven. The air blowing from the indoor fan (21) is introduced into the dust storing container (60) passing through the introduction duct (86) and the damper box (81) in this order. This transfers the dust in the dust storing container (60) to the dust collection box (90) along with the air through the transfer duct (88). Then, the amount of dust stored in the dust storing container (60) decreases, and the light intensity detected by the photo transistor (73) increases. When the detected light intensity is greater than or equal to the predetermined value (the upper limit value), the "dust transfer operation" is ended assuming that most of the dust in the dust storing container (60) has been discharged. Thereafter, the "brush cleaning operation" is resumed as necessary.

In the filter cleaning operation of the present embodiment, the "dust discharge operation" is performed based on a predetermined condition. For example, the "dust discharge operation" is performed when the "dust transfer operation" has been performed a predetermined number of times (over a predetermined amount of time). Alternatively, it may be performed based on a remote controller operation by the user.

In the "dust discharge operation," the rotating brush (51) is stopped in the state shown in FIG. 13(B) and the air filter (30) is also stopped, as in "dust transfer operation" described above. The damper (82) of the damper box (81) is in the closed state (the state shown in FIG. 11(C)). In this state, the user inserts the hose of a cleaner into the cleaner insertion hole of the decorative panel (11). By the suction operation thereof, dust in the dust collection box (90) is sucked into the cleaner passing through the transfer duct (88), the dust storing container (60) and the suction duct (87) in this order. At this point, dust in the dust storing container (60) is also sucked into the cleaner through the suction duct (87). As a result, dust in the dust collection box (90) and the dust storing container (60) is discharged to the outside of the casing (10).

### -Advantages of Embodiment-

During the "dust removing operation" in the present embodiment, each time the air filter (30) is rotated over a predetermined angle, the rotating brush (51) is rotated so as to successively change the area of the brush (51b) to be in contact with the air filter (30). Thus, it is possible to prevent the dust removing capacity from lowering due to an increase in the amount of dust captured on the rotating brush (51). That is, the dust removing capacity (i.e., the dust scraping capacity) of the rotating brush (51) can be maintained at a high level. Therefore, it is possible to reliably and easily remove dust from the entire air filter (30). As a result, it is possible to improve the reliability of the cleaning function of the air filter (30).

Particularly, in the present embodiment, the air filter (30) is rotated intermittently, and the rotating brush (51) is rotated each time the air filter (30) stops. Therefore, the air filter (30) does not pass the rotating brush (51) while the rotating brush (51) is rotating, and it is therefore possible to reliably maintain the dust removing capacity across the entire air filter (30).

Moreover, in the present embodiment, the dust removing means (50) includes the cleaning brush (52) to perform the "brush cleaning operation." Therefore, it is possible to reliably remove dust trapped on the rotating brush (51) and store it in the dust storing container (60). Thus, the dust removing capacity of the rotating brush (51) can be better maintained.

In the present embodiment, during the operation of rotating the rotating brush (51) over a predetermine angle at a time, the brush (51b) of the rotating brush (51) is kept in contact with the brush (52b) of the cleaning brush (52) to remove dust from the rotating brush (51). Therefore, it is possible to reduce the amount of time required for the filter cleaning operation.

In the present embodiment, the brushes (51b,52b) of the rotating brush (51) and the cleaning brush (52) are made of pile fabric. Therefore, since the brushes (51b,52b) have short bristles, it is possible to reduce the space for installing the rotating brush (51) and the cleaning brush (52). Therefore, it is possible to reduce the size of the dust removing means (50), and to thereby reduce the size of the indoor unit (1).

Because the brushes (51b,52b) have short bristles, and because the brush (51b) of the rotating brush (51) is provided so as to extend over only a portion thereof in the circumferential direction, it is possible to reduce the resistance to the flow of the air (i.e., the air blowing from the indoor fan (21)) in the dust storing container (60). Therefore, it is possible to improve the transfer efficiency of the dust transfer operation and the discharge efficiency of the dust discharge operation.

In the present embodiment, since the dust storing container (60) is located under the air filter (30), it presents a resistance (hindrance) to the air flow. In view of this, in the present embodiment, the dust collection box (90) is provided at a location where it presents no resistance to the air flow, and the dust transfer operation is performed for transferring dust in the dust storing container (60) to the dust collection box (90). Thus, dust removed from the air filter (30) can be finally stored in the dust collection box (90), and it is possible to reduce the size of the dust storing container (60). Therefore, it is possible to reduce the flow resistance to the air flowing toward the air filter (30), and it is as a result possible to improve the operation efficiency.

In the dust transfer operation, dust in the dust storing container (60) is transferred to the dust collection box (90) by means of the air blowing from the indoor fan (21). That is, the dust is transferred by using the existing indoor fan (21). Thus, it is not necessary to provide a separate transfer means such as a suction fan, and it is therefore possible to reduce the size and the cost af the indoor unit (1).

### «Other Embodiments»

The embodiment above may employ configurations as follows.

For example, while the air filter (30) is rotated intermittently during the dust removing operation in the embodiment above, it may be rotated continuously over one revolution or a few revolutions. In such a case, the rotating brush (51) is rotated over a predetermined angle each time the air filter (30) rotates over a predetermined angle. That is, in the present invention, the rotating brush (51) may be rotated each time the air filter (30) rotates (moves) over a certain distance or a certain amount of time, irrespective of whether the air filter (30) rotates continuously or intermittently.

While the air filter (30) is rotated relative to the rotating brush (51) during the dust removing operation in the embodiment above, the dust storing container (60) (including the rotating brush (51) and the cleaning brush (52)) may be moved relative to the air filter (30) in the present invention. In such a case, the dust storing container (60) revolves around the shaft receiving portion (33) of the air filter (30). That is, the present invention may be configured so that the air filter (30) and the rotating brush (51) move relative to each other during the dust removing operation.

While the air filter (30) is formed in a circular shape in the embodiment above, the present invention is not limited to this, and the air filter (30) may be formed in a rectangular shape. In such a case, the air filter (30) moves straight relative to the rotating brush (51), for example.

It is understood that the brush (51b) may be provided to extent not only over a portion but over the entire circumference of the rotating brush (51) of the embodiment above.

In the embodiment above, the brushes (51b,52b) of the rotating brush (51) and the cleaning brush (52) may be made of a brush material other than pile fabric.

While the embodiment above has been directed to the indoor unit (1) installed on the room ceiling, the present invention is not limited to this, and may also be applied to a so-called wall-suspended indoor unit attached to a wall in the room.

While the air blowing from the indoor fan (21), before it passes through the indoor heat exchanger (22), is introduced into the damper box (81) in the embodiment above, a similar dust transfer operation can be performed in the present invention also by introducing the air which has passed through the indoor heat exchanger (22). Note that in such a case, during a cooling operation, for example, the air having been cooled through the indoor heat exchanger (22) flows through the dust storing container (60), etc., which may cause condensation on the dust storing container (60), etc. Therefore, in such a case, the dust storing container (60) and the ducts (86,88) may be covered with a heat insulator in order to prevent the condensation.

In the embodiment above, the dust collection box (90) may be omitted while configuring the dust transfer means (80) so that dust in the dust storing container (60) is transferred directly to the outside of the casing (10) (e.g., the ceiling space).

Note that the embodiment described above is essentially a preferred embodiment, and is not intended to limit the scope of the present invention, the applications thereof, or the uses thereof

### INDUSTRIAL APPLICABILITY

As described above, the present invention is useful for an indoor unit of an air conditioner having a dust removing function of removing dust on an air filter by means of a brush member.

## Claims

1. An indoor unit of an air conditioner comprising an indoor heat exchanger (22), an indoor fan (21), and an air filter (30) provided on an inlet side of the indoor fan (21), provided in a casing (10), the indoor unit comprising:
a rotating brush (51) including a brush (51b) on an outer circumferential surface thereof for scraping dust off of the air filter (30) by moving the brush (51b) relative to the air filter (30) while the brush (51b) is in contact with the air filter (30); and
brush drive means (53) for rotating the rotating brush (51) over a predetermined angle each time the air filter (30) relatively moves over a certain distance or a certain amount of time to thereby successively change a contact area between the brush (51b) and the air filter (30).

2. The indoor unit of an air conditioner of claim 1, wherein
the air filter (30) is configured to perform an intermittent operation in which the air filter (30) stops each time the air filter (30) relatively moves over a certain distance or a certain amount of time, and
the brush drive means (53) is configured to rotate the rotating brush (51) over a predetermined angle for each of the intermittent stops of the air filter (30).

3. The indoor unit of an air conditioner of claim 1 or 2, comprising:
a cleaning brush (52) to be in contact with the brush (51b) of the rotating brush (51) for removing dust from the brush (51b).

4. The indoor unit of an air conditioner of claim 3, wherein
the cleaning brush (52) is configured so that dust is removed from the brush (51b) of the rotating brush (51) when the brush (51b) comes into contact with the cleaning brush (52) as the rotating brush (51) rotates over a predetermined angle at a time.

5. The indoor unit of an air conditioner of claim 1 or 2, wherein
the brush (51b) of the rotating brush (51) is made of pile fabric.

6. The indoor unit of an air conditioner of claim 5, wherein
the air filter (30) is formed in a disc shape and is configured to rotate and thereby move relative to the rotating brush (51), and
the rotating brush (51) is arranged upstream of the air filter (30) and so as to extend in a radial direction of the air filter (30).

7. The indoor unit of an air conditioner of claim 3, comprising:
a dust storing container (60) arranged upstream of the air filter (30) and provided with the rotating brush (51) and the cleaning brush (52) for storing dust removed by the cleaning brush (52); and
dust transfer means (80) for introducing air blowing from the indoor fan (21) into the dust storing container (60) and transferring dust in the dust storing container (60) to a predetermined location along with the blowing air.
